# FASCICULE DE BREVET EUROPEEN

(11) **EP 1 396 383 B1**
(45) Date de publication et mention de la délivrance du brevet: **08.06.2005**
(21) Numéro de dépôt: 03292208.0
(22) Date de dépôt: 09.09.2003
(51) Int. Cl.: B60R 5/04

(54) **Cache-bagages pour véhicule automobile**
Gepäckraumabdeckung für Kraftfahrzeug
Luggage cover for motor vehicle

(30) Priorité: 09.09.2002 FR 0211372
(43) Date de publication de la demande: 10.03.2004
(73) Titulaire: Renault s.a.s., 92100 Boulogne Billancourt (FR)
(72) Inventeur: Cimoli, Patrice, 78340 Les Clayes sous Bois (FR); Josse, Pascal, 78500 Sartrouville (FR)

(56) Documents cités:
- EP-A- 0 741 057
- DE-A- 19 940 602
- DE-U- 29 716 037
- FR-A- 2 694 732
- PATENT ABSTRACTS OF JAPAN vol. 2000, no. 06, 22 septembre 2000 (2000-09-22) -& JP 2000 085476 A (SUZUKI MOTOR CORP), 28 mars 2000 (2000-03-28)
- PATENT ABSTRACTS OF JAPAN vol. 2000, no. 05, 14 septembre 2000 (2000-09-14) -& JP 2000 038089 A (FUJI HEAVY IND LTD), 8 février 2000 (2000-02-08)

## Description

L'invention concerne un cache bagages pour véhicule automobile.

Plus particulièrement, elle concerne un cache bagage comprenant une tablette maintenue sur la caisse, de manière amovible, et un rideau monté sur un enrouleur et relié à la tablette, en position déroulée, au moyen d'un élément de liaison fixé à son extrémité opposée à celle de l'enrouleur,

Actuellement les véhicules de type monospace offrent différentes prestations de l'aménagement de l'habitacle intérieur. En particulier il est possible d'enlever ou de rajouter, dans l'espace arrière du véhicule, une troisième rangée de sièges.

Lorsque lesdits sièges sont retirés, le volume du coffre est alors plus important, et un grand nombre de bagages peut y être installés. Afin de les dissimuler, il existe des cache-bagages comportant un rideau rattaché à une tablette située à l'arrière, qui est maintenue à la caisse à une hauteur légèrement inférieure à celle de la vitre arrière.

Lorsque ces sièges sont mis en place, le coffre du véhicule est plus étroit. Le rideau est alors totalement enroulé et l'enrouleur est rapproché de la tablette.

Cependant ce cache-bagages ne permet d'utiliser le rideau indépendamment de la tablette, car il n'est pas détachable de celle-ci.

Pour remédier à ces inconvénients, le document EP-A1-0 741 057 décrit un cache-bagages pour véhicule automobile selon le préambule de la revendication 1, caractérisé par le fait qu'il comprend une tablette arrière amovible et un rideau monté sur un enrouleur à ressort, ledit rideau étant bordé, à son extrémité longitudinale opposée à l'enrouleur, par un profilé apte à s'engager par coulissement et à être maintenu dans un profilé de forme correspondante solidaire de la tablette, le profilé de la tablette étant fendu pour permettre le passage du rideau.

Cette solution propose un cache-bagages formé de deux éléments séparables, mais dans laquelle il est impossible de retirer le rideau et son enrouleur sans déplacer la tablette. De plus, cette solution nécessite le renfort du contour de la tablette, afin qu'elle puisse supporter les contraintes de traction du rideau lors de son déploiement.

Pour obvier à ces inconvénients, l'invention propose un cache bagage du type décrit précédemment caractérisé en ce que les éléments de maintien de la tablette comportent au moins un moyen de réception prévu pour recevoir l'élément de liaison dudit rideau.

Dans un mode de réalisation particulier les éléments de maintien de la tablette comportent une cavité et les éléments de liaison du rideau comprennent une butée prévue pour s'engager dans ladite cavité.

Selon un autre mode de réalisation, les éléments de maintien de la tablette comportent un organe mâle et les éléments de liaison du rideau comprennent une encoche destinée à recevoir l'organe mâle.

Avantageusement les éléments de maintien de la tablette sur la caisse comportent un moyen permettant le pivotement de ladite tablette.

D'autres caractéristiques et avantages de l'invention apparaîtront à la lecture de la description détaillée qui suit pour la compréhension de laquelle on se reportera aux dessins annexés dans lesquels :
La figure 1 représente le cache-bagages, objet de l'invention, appliqué dans un véhicule,
La figure 2 est une vue de dessus de la tablette objet de l'invention.
La figure 3 est une vue de dessous de la tablette objet de l'invention.

Dans la description qui va suivre, on adoptera à titre non limitatif une orientation avant et arrière selon l'orientation traditionnellement utilisée pour un véhicule.

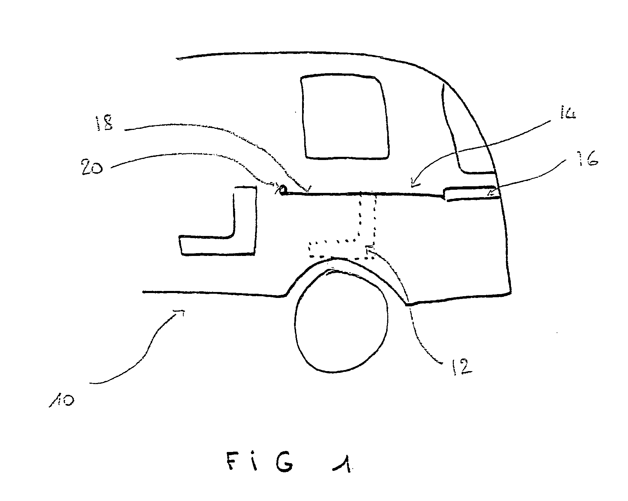

La figure 1 illustre le cache-bagages, objet de l'invention, dans un véhicule 10 de type monospace, dans lequel une troisième rangée de sièges 12 peut être démontée pour obtenir un volume de coffre plus grand.

Sur ce schéma, la troisième rangée de sièges 12 amovibles est dessinée en pointillée. Le cache-bagages 14 est représenté en position déroulée. Il comprend une tablette 16, située dans la partie arrière du coffre du véhicule, à proximité du hayon de coffre. De préférence cette tablette est placée juste en dessous de la vitre arrière, afin de ne pas réduire la visibilité du conducteur, et d'offrir un coffre d'une hauteur maximum.

Cette tablette est maintenue à la caisse de manière amovible. Avantageusement, elle est montée pivotante par rapport à son axe de maintien.

Situé à l'avant de la tablette, le cache-bagages comporte un rideau 18, monté sur un enrouleur 20. En position déroulée, le rideau 18 est relié à la tablette 16, dont les éléments de maintien comportent des moyens de réception d'un élément de liaison dudit rideau.

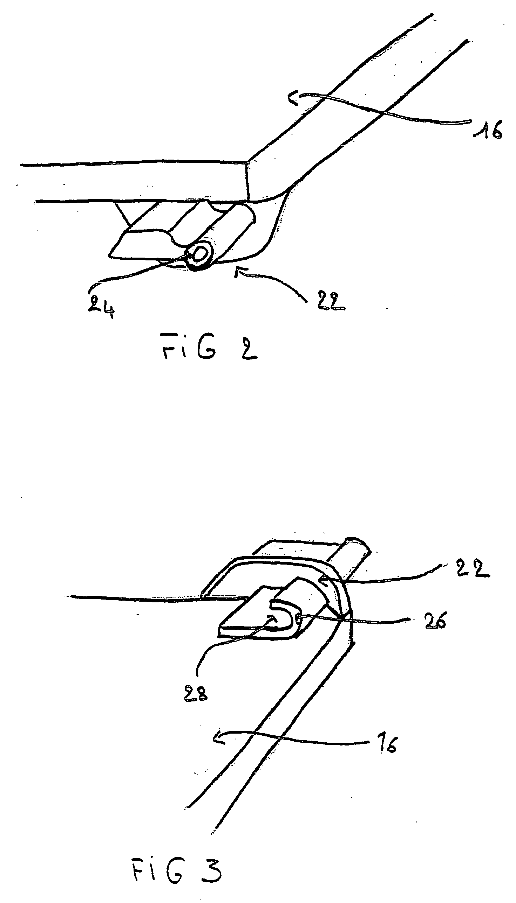

La figure 2 représente les éléments de maintien 22 de la tablette 16. Ces éléments sont fixés à la tablette par clipsage, ou bien sont moulés directement avec la tablette. Ils comportent une empreinte 24 destinée à recevoir un doigt fixé à la caisse du véhicule, et cette empreinte étant formée de manière à autoriser le pivotement de la tablette, par exemple lors de l'ouverture du hayon.

La figure 3 représente la partie inférieure des éléments de maintien 22 de la tablette 16. Tel qu'illustré sur le dessin, ils comprennent des moyens de réception 26 comportant une cavité 28 de forme circulaire apte à recevoir un élément de liaison du rideau, non représenté, et de forme complémentaire à cette cavité. L'ouverture de cette cavité est tournée vers l'arrière du véhicule, de façon à ce que l'élément de liaison du rideau soit retenu par la paroi l'entourant.

Dans un autre mode de réalisation non représenté les éléments de maintien 22 de la tablette 16 comportent un organe mâle qui s'insère dans une encoche réalisée dans les éléments de liaison du rideau.

La mise en place du cache-bagages selon l'invention peut commencer par le positionnement des extrémités de l'enrouleur 20 dans des rainures réalisées de chaque côté de l'habitacle situées, selon une direction parallèle à la direction transversale de positionnement de la troisième rangée de sièges 12.

Après le positionnement de l'enrouleur 20, l'utilisateur met en place la tablette, grâce aux éléments de maintien 22 prévus à cet effet. Afin de recouvrir les bagages contenus dans le coffre, l'utilisateur saisit le rideau 18 le tire vers la tablette, et engage l'élément de liaison du rideau dans le moyen de réception 26 de la tablette16. Les moyens de réception 26 retiennent l'élément de liaison du rideau qui est maintenu en position déroulée.

Dans un autre mode de réalisation, les éléments de liaison du rideau sont d'abord engagés dans le moyen de réception des éléments de maintien de la tablette, et cette dernière est utilisée comme une poignée pour dérouler le rideau.

Les efforts de traction sont alors situés aux extrémités longitudinales de la tablette, ce qui permet d'éviter d'utiliser de la matière supplémentaire pour le renforcement de celle-ci le long de son contour.

Le démontage du porte-bagages est effectué de manière aussi simple que son montage, en exécutant les étapes en sens inverse. Selon un mode de réalisation particulier, l'enrouleur rappelle automatiquement le rideau en position de rangement.

Si l'utilisateur le souhaite, l'enrouleur peut être enlevé et glissé sous les sièges du véhicule.

L'invention n'est pas limitée au mode de réalisation décrit et illustré qui n'a été donné qu'à titre d'exemple pour une meilleure compréhension de l'invention.

## Revendications

1. Cache-bagage (14) pour véhicule automobile (10) comprenant une tablette (16) maintenue sur la caisse, de manière amovible, un rideau (18) monté sur un enrouleur (20) et relié à la tablette (16), en position déroulée, au moyen d'un élément de liaison fixé à son extrémité opposée à celle de l'enrouleur, **caractérisé en ce que** les éléments de maintien (22) de la tablette sur la caisse comportent au moins un moyen de réception (26) prévu pour recevoir l'élément de liaison dudit rideau.

2. Cache bagage pour véhicule selon la revendication 1, **caractérisé en ce que** les éléments de maintien (22) de la tablette (16) comportent une cavité (22) et les éléments de liaison du rideau comprennent une butée prévue pour s'engager dans ladite cavité.

3. Cache bagage pour véhicule selon la revendication 1, **caractérisé en ce que** les éléments de maintien de la tablette comportent un organe mâle et les éléments de liaison du rideau comprennent une encoche destinée à recevoir l'organe mâle.

4. Cache bagage pour véhicule selon la revendication 1, **caractérisé en ce que** les éléments de maintien (22) de la tablette sur la caisse comportent un moyen permettant le pivotement de ladite tablette.

## Patentansprüche

1. Gepäckabdeckung (14) für ein Kraftfahrzeug (10), das eine Ablageplatte (16) umfasst, die an der Karosserie gehalten wird, auf abnehmbare Weise, einen Vorhang (18), der auf einem Aufwickler (20) montiert ist und mit der Ablageplatte (16) verbunden ist, in abgewickelter Position, durch ein Verbindungselement, das an seinem Ende befestigt ist, das dem des Aufwicklers gegenüberliegt,
**dadurch gekennzeichnet, dass**
die Elemente der Halterung (22) der Ablageplatte auf der Karosserie mindestens ein Mittel zum Empfang (26) umfassen, das vorgesehen ist, um das Verbindungselement des Vorhangs zu empfangen.

2. Gepäckabdeckung für ein Fahrzeug gemäß Anspruch 1, **dadurch gekennzeichnet, dass** die Elemente der Halterung (22) der Ablageplatte (16) einen Hohlraum (22) umfassen und die Verbindungselemente des Vorhangs ein Haltestück umfassen, das dazu vorgesehen ist, in den Hohlraum einzugreifen.

3. Gepäckabdeckung für ein Fahrzeug gemäß Anspruch 1, **dadurch gekennzeichnet, dass** die Elemente der Halterung der Ablageplatte ein männliches Teil aufweisen und die Verbindungselemente des Vorhangs einen Schlitz umfassen, der dazu bestimmt ist, das männliche Teil aufzunehmen.

4. Gepäckabdeckung für ein Fahrzeug gemäß Anspruch 1, **dadurch gekennzeichnet, dass** die Elemente der Halterung (22) der Ablageplatte an der Karosserie ein Mittel umfassen, das das Schwenken der Ablageplatte ermöglicht.

## Claims

1. A luggage cover (14) for an automobile vehicle (10) comprising a panel (16) held in a detachable manner on the bodywork, a screen (18) mounted on a roller (20) and connected to the panel (16) in the unrolled position by means of a fastening member secured to its end opposite the end of the roller, **characterised in that** the members (22) retaining the panel on the bodywork comprise at least one reception means (26) adapted to receive the fastening member of the screen.

2. A luggage cover for a vehicle as claimed in claim 1, **characterised in that** the retaining members (22) of the panel (16) comprise a cavity (22) and the fastening members of the screen comprise an abutment adapted to be engaged in this cavity.

3. A luggage cover for a vehicle as claimed in claim 1, **characterised in that** the retaining members of the panel comprise a male member and the fastening members of the screen comprise a slot adapted to receive this male member.

4. A luggage cover for a vehicle as claimed in claim 1, **characterised in that** the members (22) retaining the panel on the bodywork comprise a means enabling the panel to pivot.
